# EUROPEAN PATENT APPLICATION

(11) **EP 1 445 926 A1**
(43) Date of publication of application: **11.08.2004**
(21) Application number: 03002490.5
(22) Date of filing: 05.02.2003
(51) Int. Cl.: H04M 3/424, H04M 3/48

(54) **Method, system and apparatus for smart call completion on no reply**

(71) Applicant: SIEMENS AKTIENGESELLSCHAFT, 80333 München (DE)
(72) Inventor: Bakamitsos, Spiros, 17563, P.Faliro-Athens (GR)

(57) **Abstract**

A Smart Call Completion on No Reply (Smart CCNR) is provided. The Smart CCNR of the invention takes into account the motivations of the called subscriber B, such as when the B subscriber chooses not to answer her phone. In another aspect, the Smart CCNR takes into account the motivations of the calling subscriber A, such as in the case that caller A must urgently contact the called subscriber. In another aspect, the invention takes into account the status of the telecommunications network, such as when the Smart CCNR service overburdens the network. The methodology of the Smart CCNR may be provided according to administerable parameters. Also provided are modes of operation that consider predetermined situations. An implementation of the Smart CCNR is also provided.

## Description

The invention relates to a method, system and apparatus for a Smart Call Completion on No Reply in a telecommunications network.

In Telecommunications, particularly in Telephone Communications, it is an unresolved problem that a calling subscriber (A) is unable to complete a call to a called subscriber (B).

The typical situation occurs when a calling subscriber A attempts to call subscriber B. The problem arises when the called subscriber B does not respond and, as a result, subscriber A is unable to complete the call. The calling subscriber A has no other recourse than to continue to hold the line or call back repeatedly. The problem is not only annoying to the calling subscriber (A), but may be critical in situations where it is important or urgent for subscriber A to communicate with subscriber B.

In order to alleviate the problem described above, there are provided supplementary or ancillary services for completing a call. There are known, for example, supplementary services which adhere to the ISO 13866 and 13870 standards proscribed by the International Standards Organization (ISO).

In general, supplementary services are special services provided by a telecommunications carrier for providing additional functionality. This is in addition to the basic service of providing a carrier and connecting subscribers.
In addition to the call completion service already referred to, supplementary services may also include call waiting, call forwarding, and the like.

One such service that attempts to resolve the problem is known as Call Completion On No Reply (CCNR). As proscribed by CCNR, a calling subscriber A calls subscriber B. B does not answer. The caller A activates the CCNR feature which, in response, monitors the called subscriber's line. During this monitoring time, it is contemplated by CCNR that the called subscriber B returns and uses his telephone device. When the B subscriber finishes his call, the original caller A is informed and a call from the original calling subscriber A to called subscriber B is established.

The problem with CCNR and other known supplementary services is that the called subscriber B is required to physically pick up the receiver, or otherwise go 'off hook', in order to trigger the CCNR feature. CCNR does not contemplate the situation where the called subscriber B returns after CCNR completes its monitoring time. Nor does CCNR contemplate the situation where the B subscriber simply does not answer the phone, such as when B screens calls or is busy with other matters. The old CCNR simply is not capable of responding to B's behavior. Conversely, the CCNR service does not contemplate an urgency of the calling subscriber A.

In addition, the old CCNR does not contemplate a relationship between the calling subscriber A and the called subscriber B. Perhaps, the caller A has a business relationship with subscriber B and does not want to offend a business partner. For example, perhaps caller A is a telemarketing sales representative. In such a case, the old CCNR would not only annoy the called subscriber B with repeated calls, the caller A may lose B's business as a result.

In other words, the old CCNR technique is a so-called 'dumb' service that does not take into account the motivations of either the calling subscriber A or the called subscriber B. What is needed that has not heretofore been provided is a Smart CCNR service that is capable of responding to the motivations of the subscribers and, therefore, is able to establish the call completion more quickly.

Another supplementary service that is related to CCNR is known as Completion of Call to Busy Subscriber (CCBS). As with CCNR, CCBS is provided in accordance with the international standards to complete calls when there is no reply. In contrast, however, CCBS contemplates that the line of the called subscriber B is busy. In this case, the CCBS supplementary service automates efforts to repeatedly call the busy line of the B subscriber. When the B subscriber line is no longer busy, the calling subscriber A is notified.

As will be readily appreciated, CCBS suffers from the same deficiencies as the old CCNR technique. The problem with CCBS arises because it considers the case in which the called subscriber telephone line is busy. One defect with this tactic is that the CCBS service assumes that the called subscriber B is in the vicinity of her telephone when she hangs up the phone. First, the CCBS service does not consider the case where the called subscriber is not at home at all. Second, the CCBS service does not consider motivations of the called subscriber B. For example, CCBS does not consider the situation where the B subscriber simply chooses not to answer the phone after hanging up. Or, perhaps the called subscriber B is in a hurry and has no time to answer the CCBS call. As in the case of the old CCNR, CCBS simply does not consider the motivations of the called subscriber B or, for that matter, the calling subscriber A.

In addition, the aforementioned supplementary services do not take into account the status of the telecommunications network. Neither the CCNR nor the CCBS service contemplates, for example, that repeated calls to the called subscriber B are not only annoying, they take up bandwidth. Considering that several calling subscribers may employ call back services, such services in the aggregate could overburden the telephone network. As a result, the services of the past may have the unintended effect of tying up phone connections and actually reducing the chances that the call is completed. Again, the services of the past are dumb services. They do not take into account the situation of the telecommunications network.

What the previous supplementary services lack is the flexibility to complete a call to a called subscriber B in various situations, such as when the called subscriber B chooses not to answer her phone. What is lacking in the prior services is the ability to take into account the motivations of the parties, such as when the calling subscriber A must urgently reach subscriber B or when calling party A has a business relationship with party B. What is further lacking is that the services of old do not contemplate the telecommunications network may be overburdened by increased traffic owing to such call back services.

What is needed is an intelligent supplementary service, hereinafter referred to as a Smart Call Completion on No Reply (Smart CCNR) method, system and apparatus, that is capable of taking into account the various motivations of either subscriber. What is needed is a Smart CCNR that takes into account the status of the telephone network. With such a Smart CCNR of the present invention the calling subscriber A is able to complete a call to the called subscriber B more quickly.

An object of the invention is to provide call completion.

Another object of the invention is to provide call completion more quickly.

Still another object of the invention is to provide smart call completion.

Yet another object of the invention is to take into account motivations of the calling subscriber A.

A further object of the invention is to take into account motivations of the called subscriber B.

A still further objection of the invention is to preserve a business relationship of the subscribers.

An additional object of the invention is to take into account status of telecommunications network.

The present invention contemplates completing a call more quickly by providing a Smart Call Completion on No Reply or Answer. Thus, for example, the Smart CCNR of the present invention takes into account the motivations of the called subscriber B, such as when the B subscriber chooses not to answer her phone. In another aspect, the Smart CCNR takes into account the motivations of the calling subscriber A, such as in the case that caller A must urgently contact the called subscriber. In another aspect, the invention takes into account the status of the telecommunications network, such as when the CCNR service overburdens the network.

In accordance with the invention, there is provided a method for call completion on no reply when a calling subscriber (A) calls a called subscriber (B) of a telecommunications network and the called subscriber (B) does not reply. In this case, an automatic call back procedure for completing the call is initiated, in which a plurality of call back responses that direct a manner in which the automatic call back procedure sends ring signals to a termination point of the called subscriber (B) are provided. The manner of calling back of at least one call back procedure is based on a situation between the subscribers (A, B). The call back response is selected based on the situation between the subscribers (A, B).

Further, there is provided in a telecommunication network having at least a subscriber (A) who calls a subscriber (B), an apparatus for completing a call when subscriber (B) does not reply to the call. A processor directs a manner in which call back responses that call back subscriber (B) are to send ring signals to a termination point of the called subscriber (B) based on a situation between the subscribers (A, B). A switch calls back subscriber (B) according to the direction of the processor.

In an aspect of the invention, a relationship between the operation of the Smart CCNR and the urgency of the call is developed. In this manner, the calling subscriber A can adjust the service to reflect the level of urgency. Thus, the calling subscriber does not, for example, alienate the called subscriber B with repeated calls.

In another aspect of the invention, there are provided selectable modes of operation that each represent a different situation. The modes, for example, may be based on the urgency or motivations of the calling subscriber A.

It is also within the scope of the invention to implement the Smart CCNR in a telecommunication network. In one aspect, it is contemplated to implement the Smart CCNR in an Electronic Worldwide Switch Digital (EWSD) network ™ such as provided by Siemens Corporation.

Other exemplary embodiments and advantages of the present invention may be ascertained by reviewing the present disclosure and the accompanying drawings.
- Fig. 1: is a schematic diagram of a telecommunications network;
- Fig. 2: is a flow diagram for call completion;
- Fig. 3: is an EWSD ™ network; and
- Fig. 4: is a flow diagram for implementing the service.

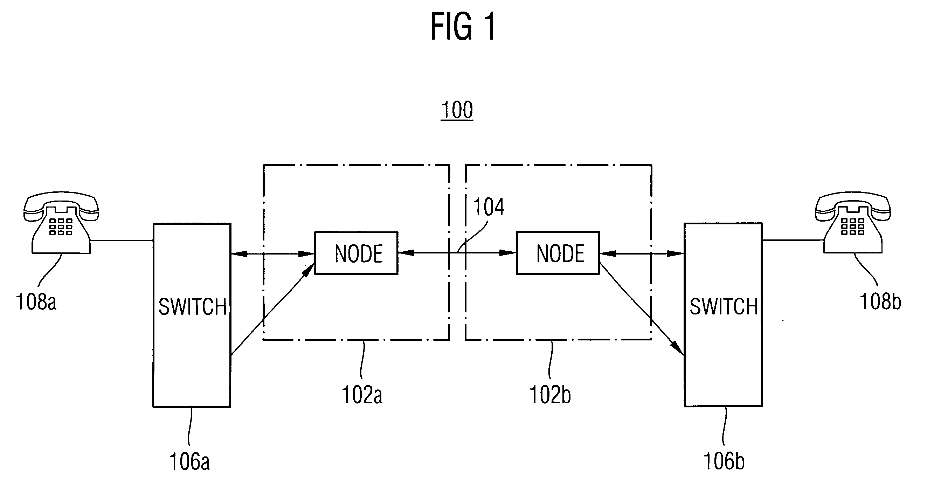

The present invention may be implemented as a system, method or apparatus for Smart Call Completion On No Reply (Smart CCNR) for completing a call in the telecommunications network 100 exemplified by Fig. 1.

The telecommunications network contemplated herein is fundamentally a series of points or nodes 102 a, b interconnected by communication paths 104. A first telephone switch 106a is located in a first location and a second telephone switch 106b is located at a location remote from the first location. The switches 106a, 106b are network devices that select a path or circuit for sending a unit of data to its next destination and may be provided by standard electronic telephone switches such as those provided by Siemens EWSD ™. Individual subscriber telephones 108a, 108b are connected to switches 106a, 106b respectively by conventional wired or wireless lines schematically represented in Fig. 1.

It shall be understood that the invention is not limited to any particular type of network. The network here may be an LEC (local exchange carrier), i.e., a public telephone company that provides local service. However, the invention is not so limited and may include any type of telecommunications exchange, such as the EWSD network ™ described below. In addition, the present invention is not limited to a specific type of protocol for telecommunication and can in fact be utilized with at least the ISDN, PSTN (analog), Centrex and PBX protocols. Similarly, the present invention is applicable and readily administerable to any type of telephone system, including land line, mobile and satellite telephony.

According to the basic service of a telephone network, a calling subscriber A using the first telephone 108a desires to contact a called subscriber B located at the second telephone 108b. When caller A goes off-hook and dials subscriber B's telephone number, switches 106a and 106b are connected by conventional wired or wireless networks, such as the public switched telephone network. The node 102a, the so-called originating telecommunication node, is adapted to place and receive calls from switch 106a to the node 102b, the terminating telecommunication node. The terminating telecommunication node 102b places the call through to switch 106b, which establishes the call to the called telephone 108b.

The present invention is particularly related to providing a Smart CCNR service. This service may be provided in the aforementioned telecommunications network. As previously indicated, the Smart CCNR of the present invention more quickly establishes call completion. The Smart CCNR contemplates various situations, particularly the situation that the called subscriber is not in the vicinity of the telephone, such as when subscriber B is not at home.

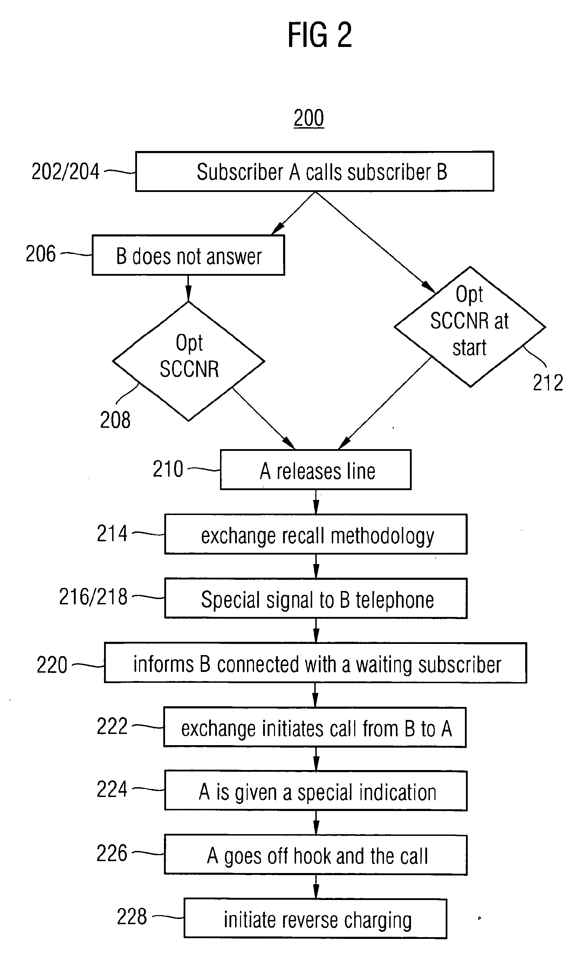

Now in more detail, the method of the invention shall be described with reference to the flow diagram 200 of Fig. 2. In step 202, the calling subscriber A calls subscriber B.
The exchange attempts to establish the connection at step 204 in accordance with the call connection already described. In step 206, the call is connected through to the called subscriber B's telephone, but B does not answer. As already discussed, there may be various reasons why B does not answer the phone.

At this time, the calling subscriber A activates the Smart CCNR service in step 208. It will be appreciated that this may be accomplished with any of the known techniques for activating services, such as a programmable key, etc. Once the Smart CCNR is activated, caller A releases the line in step 210 and the Smart CCNR assumes control. In the described embodiment here, the Smart CCNR service acts independently such that caller A's line is free for other calls.

As an alternative, step 212 provides a dial and forget feature that allows the caller A to activate the Smart CCNR at the beginning of the call. This is possible with the Smart CCNR because the Smart CCNR utilizes a methodology for completing the call to the called subscriber B. With this methodology, the caller A does not need to monitor any portion of the call procedure.

Therefore, in step 214, the exchange institutes automatic recall according to a selected methodology of the invention. A special signal, i.e., tone or announcement, is then sent to the B telephone in step 216. This may occur as an audible tone emitted, according to step 218, from an external speaker of the telephone or through the speaker receiver when B picks up the hand set.

Then, the exchange informs the called subscriber B that she will be connected with a waiting subscriber A in step 220. In step 222, the exchange initiates a basic call from subscriber B to the original caller A. At this time, the original caller A may be given a special indication in step 224, such as a tone emitted be the telephone, the handset, etc. that indicates that B is returning the call. In step 226, original caller A answers the phone, i.e., goes off hook and the call is completed.

In one aspect of the invention, it is contemplated that the caller A is the original caller and, therefore, should pay the cost of the call. However, since B returns the call, the exchange records B as the caller and charges B for the call. Under these circumstances, the exchange provides an option to implement reverse billing so that A bears the cost of the call. This is represented in Fig. 2 by step 228.

As already mentioned, it is not necessary with the present invention that B picks up the phone to be alerted to an urgency of a call. This is provided in one aspect of the invention by using a methodology that relates the management of the automatic return call service to various situations. More specifically, the methodology dictates the manner in which ring signals are sent to the called subscriber B's telephone depending on the situation. According to one methodology, the Smart CCNR provides the calling subscriber A with the ability to self administer the call back procedure as a function of ring signal parameter(s), which may be thought of as reflecting an urgency of the call (referred to also as urgency parameters).

In one aspect, the invention provides that the call back procedure is a function of the time interval between the recalls, the time period within which the recalls are performed and the number of times the phone should ring for each recall. The time interval between recalls is important when considering that the called subscriber is not at home. A longer time interval has better chances to catch subscriber B, while at the same time not overburdening the telephone network. Conversely, a shorter time interval would tend to indicate to subscriber B that a call is urgent. Upon subscriber B's return, therefore, B would be alerted to the urgency by the frequency of the returned calls recorded on, for example, a message service.

The time period in which return calls are performed may be utilized to test whether B or a colleague is in the vicinity of the phone. By adjusting the time period to short intervals, the Smart CCNR is able to send short test calls to the called telephone B. Further, the number of rings per call may be increased to either indicate an urgency of the call or decreased to prevent the called subscriber from being annoyed. In the latter case, the Smart CCNR prevents B from becoming annoyed and preserving a relationship between the parties A & B. Of course, the invention is not so limited to these specific parameters and may include any combination thereof as well as other parameters.

In another aspect of the invention, the Smart CCNR provides predetermined sets of responses to situations. These may be thought of as modes of operation. In one mode, the urgency of the calling subscriber A is high and it is desired to contact the B party immediately when she returns. In this case, the Smart CCNR activates an aggressive strategy for reaching the B subscriber. For example, the Smart CCNR may shorten the time interval between calls to 5 minutes. In case that B is not at home, the Smart CCNR sets the number of rings to 1 ring per call, for example. This reduces telephone traffic as well as the number of recorded attempts on B's telephone. Upon B's return, B will notice the number of attempted calls and recognize that the call must be urgent even without picking up the phone.

In a second mode, it is desired to leave a message or alert the called subscriber B that a call is pending. It is contemplated in this case that a colleague of B, such as a co-worker or secretary, is available to answer the call. This may be the case when A calls a business or place of work. In this mode, it is intended that the colleague returns the caller's call or relays the urgency of the call to subscriber B. To that end, the Smart CCNR increases the number of rings per call to catch the attention of the colleague. In this case, the interval of the calls may be set, for example, further apart or staggered, in order to increase the chances that the colleague will wander by B's telephone and answer the call.

In a third mode, the called subscriber B is at home but does not want to be disturbed. This is the case of the so-called screening subscriber who ignores unknown or multiple calls. The Smart CCNR in this case engages a passive call back strategy designed to capture the attention of the B subscriber without alienating or desensitizing B to incoming calls. This could be, for example, the situation where a tele-marketer solicits B's business. In this case, for example, the Smart CCNR limits the number of rings to 1 ring per call. However, to impress upon B to answer the phone, the interval between calls is moderately increased and may be, for example, set to 3 minutes.

In a fourth mode, the called subscriber B is not in the vicinity of the telephone, such as when not at home. In this case, the Smart CCNR adopts a long term strategy in order to reduce call-back traffic while increasing the chances to catch the called subscriber upon her return. Here, for example, the Smart CCNR shortens the frequency of calls by increasing the interval between calls to ten minutes. The Smart CCNR may also increase the length of the period for call back in the anticipation that B will return later.

The foregoing modes are merely examples of the present invention and are not intended to be the exclusive embodiments of the invention. Certainly, other modes are within the scope of the invention. To reiterate, the present invention provides a Smart CCNR that takes into account various parameters, such as the motivations and relationship of the parties and the telecommunications network. With this invention, the calling subscriber A is able to reach a called subscriber B much more quickly.

It shall be appreciated that the Smart CCNR takes into account increased telephone traffic owing to such a call back procedure. Alone, a single call back service may not over burden the network. However, in the aggregate, a plurality of call back services may inundate a terminating subscriber and overwhelm the tele-network. No such consideration was contemplated by the prior call completion services.

The invention combats increased telephone traffic by relating the call back procedures to an urgency of the call. Thus, the level of traffic created is commensurate with the nature of the call. The Smart CCNR further combats telephone traffic by automatically limiting the call back parameters. For example, the number of recalls may be limited and the time interval between calls may have a minimum allowable length. The limitations may be set in accordance with an available bandwidth of the telecommunications network.

In addition, the Smart CCNR reduces telephone traffic by providing a deactivation feature for automatically deactivating the service. It is contemplated, for example, that the service is deactivated after a predetermined number of recalls. Also, the service may be deactivated when the called subscriber has been reached. Also, Smart CCNR provides the user the ability to manually deactivate the feature. The prior services, on the other, tend to call back indefinitely.

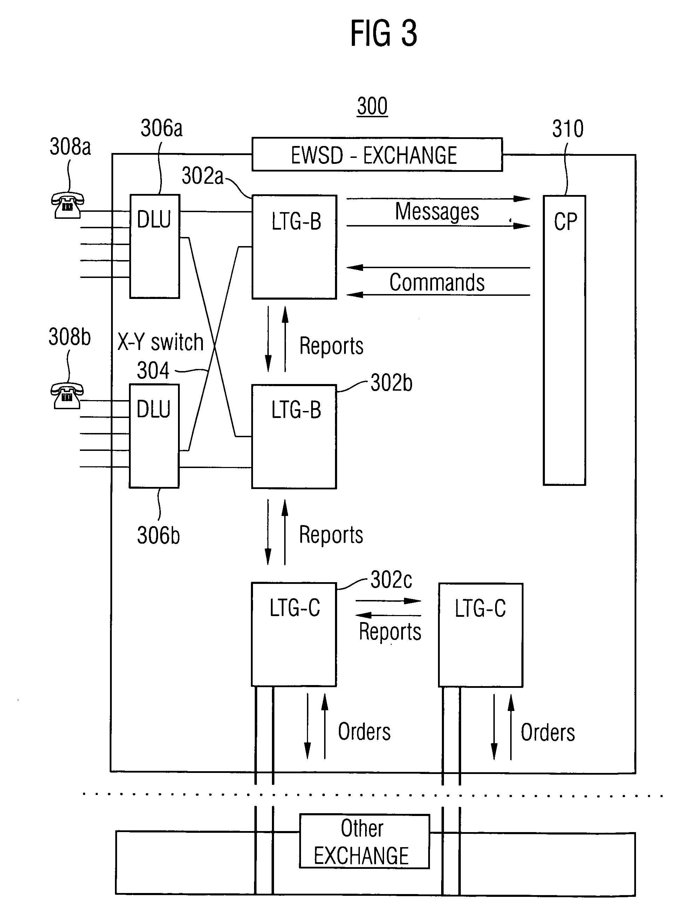

The present invention has thus far been described in terms of the call back service. The invention also comprises an implementation of the Smart CCNR in a network. For purposes of illustration, the present invention may be implemented in the EWSD ™ Network (provided by Siemens ™) shown in Fig. 3. Needless to say, the network shown in Fig. 3 is but one example and various telephone network architectures may implement the call back service of the present invention.

Now in more detail, Fig. 3 shows an architecture of an EWSD™ exchange 300. Line/Trunk Groups (LTG) 302a, b (similar to the nodes 102a,b in Fig. 1) connect through switching 304 (104) to corresponding switches, i.e., the Digital Line Units (DLU) 306a,b (106a,b). A calling subscriber telephone 308a is coupled to DLU 306a and a respective called subscriber telephone 308b is similarly connected to DLU 306b. In addition, there may be additional DLU units 302c, which may control switching between the instant exchange and other exchanges. A control processor 310 is provided that handles messages and sends commands to the DLUs 302a,b. The precise manner in which EWSD ™ controls basic processing of calls is a known Siemens ™ standard and will not be discussed in detail here.

In broad terms, the EWSD ™ network performs basic call processing in a similar fashion as described by the generic network illustrated in Fig. 1. With respect to supplementary services, the EWSD™ network supports the known Advanced Intelligent Network (AIN) standard that implements new services in a switching network. AIN accomplishes this by separating the service logic from the switching equipment.
An advantage thereof is that AIN allows the addition of new services without requiring the switches to be redesigned. In any case, the present invention takes advantage of AIN to implement the Smart CCNR in the EWSD network. Needless to say, the invention also encompasses other implementation strategies such as those promulgated by the International Telecommunications Union (ITU).

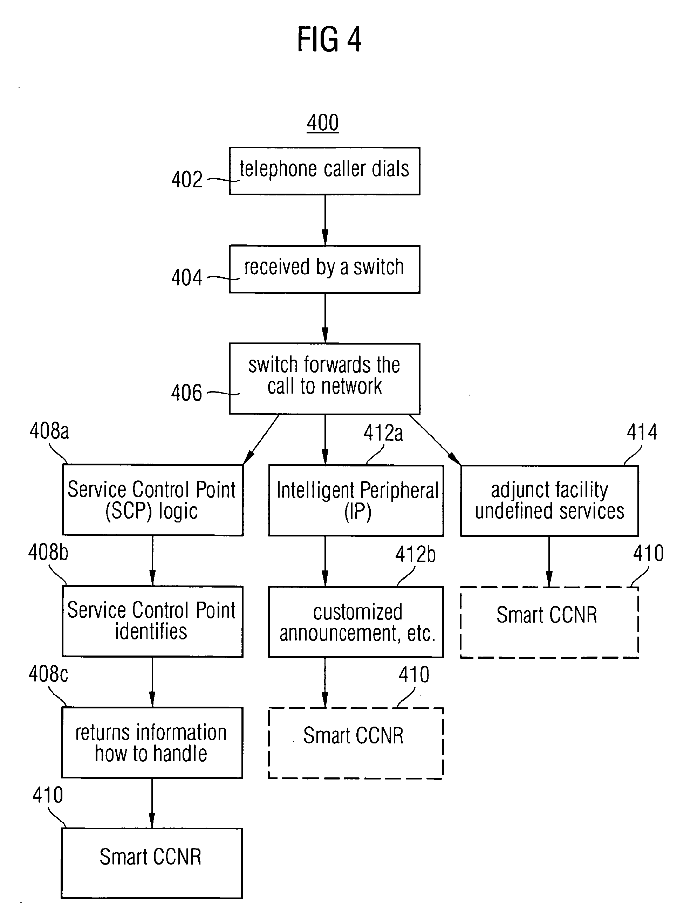

Fig. 4 illustrates the flow process 400 by which the Smart CCNR is implemented into the network of Fig. 3 using AIN. In step 402, a telephone caller dials a number that is received by a switch at the telephone company central office in step 404. According to AIN, the dialed number includes an identifier for identifying a type of service. The switch may be a Service Switching Point (SSP) that forwards the call over a network in step 406. The network may be, for example, the Signaling System 7 (SS7) network. The call is routed to a Service Control Point (SCP) in step 408a where the service logic is located. The Service Control Point identifies the service requested by use of an AIN identifier in part of the number that was dialed in step 408b. In step 408c, the SCP returns information about how to handle the call to the Service Switching Point. Then, the Smart CCNR is activated in step 410 as previously described.

In the alternative, the call is handled by an Intelligent Peripheral (IP) in step 412a that is attached to the Service Switching Point over a high-speed connection. For example, a customized service, namely the Smart CCNR, is delivered by the IP in response to the dialed number as indicated by step 412b. In another alternative, an adjunct facility connected directly to the Service Switching Point provides in step 414 additional or undefined services. After either alternative steps for delivering the service, the Smart CCNR described in detail earlier is executed in step 410.

Although the invention has been described in its preferred forms with a certain degree of particularity, obviously many changes and variations are possible therein. It is therefore to be understood that the present invention may be practiced otherwise than as specifically described herein without departing from the scope and spirit thereof.

## Claims

1. A method for call completion on no reply when a calling subscriber (A) calls a called subscriber (B) of a telecommunications network and the called subscriber (B) does not reply, wherein an automatic call back procedure for completing the call is initiated, comprising the steps of:
providing a plurality of call back responses that direct a manner in which the automatic call back procedure sends ring signals to a termination point of the called subscriber (B),
basing the manner of calling back of at least one call back procedure on a situation between the subscribers (A, B),
and selecting from among the call back responses based on the situation between the subscribers (A, B).

2. The method according to claim 1, further comprising the step of activating the automatic call back procedure according to the selected call back response.

3. The method according to claim 1, in which call back responses indicate an urgency level of the call.

4. The method according to claim 3, in which the ring signals are sent in such a manner according to the selected call back response such that the called subscriber B is alerted to the urgency level without answering the call.

5. The method according to claim 1, in which the call back responses are a function of ring signal parameters that control a timing of ringing the termination point.

6. The method according to claim 5, in which one of the ring signal parameters is a time interval between recalls.

7. The method according to claim 5, in which one of the ring signal parameters is a time period within ring signals of a recall are sent.

8. The method according to claim 5, in which one of the ring signal parameters is a number of times a recall is executed.

9. The method according to claim 1, in which the call back responses are provided as modes of operation, wherein each mode defines a set of ring signal parameters for sending ring signals to the termination point in contemplation of a particular situation.

10. The method according to claim 9, in which one mode of operation sets the ring signal parameters in contemplation that subscriber (A) urgently needs to complete the call to subscriber (B).

11. The method according to claim 9, in which one mode of operation sets the ring signal parameters in contemplation that subscriber (A) intends to reach a colleague of subscriber (B).

12. The method according to claim 9, in which one mode of operation sets the ring signal parameters in contemplation that subscriber (A) intends to reach subscriber (B) who is present at the termination point but is not answering calls.

13. The method according to claim 9, in which one mode of operation sets the ring signal parameters in contemplation that subscriber (A) intends to reach subscriber (B) who is not at home.

14. In a telecommunication network having at least a subscriber (A) who calls a subscriber (B), an apparatus for completing a call when subscriber (B) does not reply to the call, comprising:
a processor that directs a manner in which call back responses that call back subscriber (B) are to send ring signals to a termination point of the called subscriber (B) based on a situation between the subscribers (A, B), and
a switch that calls back subscriber (B) according to the direction of the processor.

15. The apparatus according to claim 14, wherein the processor directs the manner in which call back responses are to send ring signals according to ring signal parameters that control a timing of ringing the termination point.

16. The apparatus according to claim 14, wherein the processor directs the manner in which call back responses are to send ring signals according to modes of operation, wherein each mode defines a set of ring signal parameters for sending ring signals to the termination point in contemplation of a particular situation.

17. The apparatus according to claim 14, wherein the telecommunications network is an EWSD network.

18. The apparatus according to claim 17, wherein the switch is a DLU.

19. The apparatus according to claim 17, wherein the processor implements the call back responses using AIN.

20. The apparatus according to claim 17, further comprising downloadable code employed by the processor to direct the manner in which the call back responses send the ring signals.
